# EUROPEAN PATENT APPLICATION

(11) **EP 4 741 282 A1**
(43) Date of publication of application: **13.05.2026**
(21) Application number: 24315513.2
(22) Date of filing: 06.11.2024
(51) Int. Cl.: B64C 1/40, B64C 1/10, B64C 27/06, B64D 27/14, B60R 13/08

(54) **A ROTARY WING AIRCRAFT WITH A FIREWALL ARRANGEMENT LOCATED ABOVE AN UPPER PRIMARY SKIN THAT COMPRISES A POLYMERIC COMPOSITE**

(71) Applicant: AIRBUS HELICOPTERS DEUTSCHLAND GmbH, 86609 Donauwörth (DE); Airbus Helicopters, 13725 Marignane Cedex (FR)
(72) Inventor: Kempf, Manuel, D-86609 DONAUWÖRTH (DE); Fink, Axel, D-86609 DONAUWÖRTH (DE); Walch, Philipp, D-86641 RAIN AM LECH (DE); Specht, Luca, D-85238 PETERSHAUSEN (DE); Dosch, Valerie, D-70794 FILDERSTADT (DE); Pritzkow, Walter, D-70567 STUTTGART (DE); Gauthier, Loïc, F-92260 FONTENAY-AUX-ROSES (FR)
(74) Representative: GPI Brevets

(57) **Abstract**

The invention relates to a rotary wing aircraft with a fuselage that includes an upper primary skin (2c) which comprises a polymeric composite, and with an aircraft upper deck (6) arranged above the fuselage; wherein the aircraft upper deck (6) comprises an engine accommodating region (7) that accommodates at least one aircraft engine (11b) within a firewall arrangement that comprises at least one lower firewall (30b) arranged above the upper primary skin (2c) of the fuselage and spaced apart from the upper primary skin (2c); wherein the at least one lower firewall (30b) includes at least a lower firewall panel (40) and a high emissivity panel covering layer (43a) that covers the lower firewall panel (40) and comprises a high emissivity of at least 0.7; and wherein the high emissivity panel covering layer (43a) is facing the at least one aircraft engine (11b).

## Description

The present invention relates to a rotary wing aircraft with a fuselage that forms an aircraft interior region, the fuselage comprising an upper primary skin that separates the aircraft interior region from an aircraft upper deck arranged above the fuselage, wherein the aircraft upper deck comprises an engine accommodating region with a firewall arrangement, the engine accommodating region accommodating at least one aircraft engine within the firewall arrangement such that the firewall arrangement defines a fire proof separation at least between the at least one aircraft engine and the aircraft interior region.

In a rotary wing aircraft, such as a small or medium-size helicopter, an associated fuselage typically comprises an upper primary skin that separates an aircraft interior region, which is formed by the fuselage, from an aircraft upper deck arranged above the fuselage. The aircraft interior region usually accommodates at least a cockpit and may further accommodate a cabin for passengers and/or cargo.

The aircraft upper deck generally includes an engine accommodating region that accommodates one or more engines, typically air breathing gas turbines, and that is, therefore, also referred to as the "engine deck". The one or more engines are adapted for driving the rotary wing aircraft, e. g. by providing power to an associated power distribution unit, such as a gear box, which then provides this power to a suitable propelling unit, such as e. g. a rotor, propeller or other.

Typically, the engines are arranged outside of the aircraft interior region, on top of the fuselage and close to the other main components of a respective powerplant, the main gear box and the main rotor. This is crucial for the entire aircraft performance, safety and reliability.

According to airworthiness certification regulations, the engine deck of a given rotary wing aircraft must be fire proof in a fire event. Basically, each engine has to be isolated from the rest of the rotary wing aircraft and the engine deck has to be designed such as to prevent corrosion and to prevent hazardous substances passing from a respective engine compartment to other parts of the rotary wing aircraft. Moreover, an associated primary structure enclosed within the engine compartment has to be capable of sustaining limit load during a fire event of 15 min of duration. Adequate assumptions have to be made regarding a possible size and location of damage on the primary structure of the rotary wing aircraft. No burn through or backside flame ignition is acceptable and respectively employed materials must behave self-extinguishing after flame exposure. These measures are independent of additional fire extinguishing systems.

In particular, the engine deck must be capable of sustaining service temperatures without deterioration of load carrying or fire proof capabilities. Respective operating temperatures acting on the aircraft upper deck as a whole are a result of the heat radiation of the engines and are essentially a function of the location within the engine compartment, the engine proximity, the compartment design and the engine characteristics among others. Typically, higher temperatures are present at the rear section of the engine compartment close to an associated engine combustion chamber and an associated exhaust. In fact, typical operating temperatures of the engine deck range from about 70 °C to 300 °C.

As a result, each engine compartment and, more generally, the engine deck as a whole is equipped with a suitable firewall arrangement which forms a fire protection zone. The fire protection zone accommodates the engines within the firewall arrangement such that the firewall arrangement defines a fire proof separation between the engines, towards the forward and aft regions of the engine deck and the aircraft interior region formed by the fuselage of a given rotary wing aircraft.

More specifically, a firewall arrangement in an engine deck may be delimited by a lower firewall located above the upper primary skin of the fuselage, as well as by a front firewall, a rear firewall, and a cowling that represents an upper loft of a given rotary wing aircraft and covers the engine deck. If the rotary wing aircraft is a twin-engine aircraft, both engines are usually separated from each other by a center firewall protecting both engines from each other. In any case, the engines are attached to the upper primary skin and corresponding framework members such as beams or frames by means of several engine mounts. The front firewall and the rear firewall represent a barrier to respective front and rear portions of a given aircraft upper deck. The cowling is usually at least partially removable to provide access to the engines.

An illustrative firewall arrangement is described in the document EP 3 932 801 B1. More generally, the document EP 3 932 801 B1 describes a rotary wing aircraft with a fuselage that forms an aircraft interior region, the fuselage comprising an upper primary skin that separates the aircraft interior region from an aircraft upper deck arranged above the fuselage. The aircraft upper deck comprises an engine accommodating region with a firewall arrangement which accommodates two aircraft engines within the firewall arrangement such that the firewall arrangement defines a fire proof separation at least between the two aircraft engines and the aircraft interior region. The firewall arrangement comprises a mid firewall that separates the two engines from each other and further comprises, for each engine, a front firewall, a rear firewall, and a lower firewall that is funnel-shaped and arranged between the aircraft engine and the upper primary skin of the fuselage. The lower firewall converges from an outer perimeter to at least one inner collecting point. The outer perimeter is spaced apart from the upper primary skin of the fuselage and at least attached to the front firewall and the rear firewall.

The upper primary skin of the fuselage may comprise a polymeric composite, in particular a carbon fiber reinforced polymer (CFRP). The lower firewall may comprise a minimum gauge titanium sheet with respect to fire proof performance. It may similarly comprise alternative metallic or non-metallic high temperature resistant and fire proof materials, such as ceramics, in particular fiber reinforced ceramics, hybrid organic-inorganic composites or high temperature and fire proof polymeric composite materials.

In any case, the lower firewall must mandatorily be designed to protect the load carrying CFRP upper primary skin from both direct and indirect effects of fire. By being fireproof, the lower firewall protects by definition from direct effects of fire, but the confined space within the perimeter of the engine accommodating region requires also an effective insulation concept to prevent the upper primary skin from being overheated during an engine fire event.

In order to protect the upper primary skin from overheating, the heat flux from a respective engine fire through the lower firewall into the load carrying CFRP upper primary skin must be limited. Simple arrangements are ineffective either in terms of thermal insulation capability, e. g. if merely a fireproof lower firewall is provided, or result in additional weight, e. g. if an additional thermal protection is provided on the upper primary skin.

More specifically, if the lower firewall is merely implemented by means of simple sheet metal (Ti) or monolithic Ceramic Matrix Composite (CMC) material and if typical distances available between the lower firewall and a respective upper primary skin of up to 100 mm (usually 30-80 mm) are assumed, it would only require a comparatively short period of time - depending on firewall thickness - until the load carrying CFRP upper primary skin would overheat and reach degradation temperature of the associated CFRP material. In contrast thereto, attachment of thermal insulation material to the load carrying CFRP upper primary skin would require an amount and thickness (30-40 mm) of thermal insulation material to be efficient, which is too high to comply with space allocations and weight requirements.

More generally, the following thermal protection concepts are conventionally used and well-known:
1.) Thermal protection on top, i. e. on an engine facing side of the lower firewall: This concept is quite effective to address indirect effects of an eventual engine fire on a lower or backside of the lower firewall which faces the upper primary skin, such as backside ignition of paint and sealant, melting of aluminum stringers or overheating of equipment below the engine accommodating region. However, this concept must deal with maintenance and inspection issues, interference with fire detection lines on top of the upper primary skin, dirt and dust accumulation between the thermal protection and the upper primary skin, etc.
2.) Thermal protection on the lower or backside of the lower firewall: This concept is less effective than the thermal protection on the engine facing side and adds a considerable amount of weight to the lower firewall.
3.) Thermal Protection Systems (TPS) for hypersonic, space and re-entry vehicles: Several TPS were developed to address the rather similar challenge of protecting load carrying structures of such vehicles from being overheated during hypersonic flight or re-entry by limiting heat flux from hot outside surfaces towards adjacent load carrying structures. Different thermal management techniques have been reported, such as passively or actively cooled systems, ablative surfaces, environmental barrier coatings for CMCs and effects of geometry. Also, thermal heating effects (surface heating, radiation, conduction) are described.

The stand-off TPS concept decouples thermal protection and structure in a way similar to the function separation approach of a conventional helicopter engine deck into separate parts. Its hot surface may be made from several CMC panels with fibrous internal insulation.

Furthermore, the so-called "internal multi-screen insulation" comprises an outer hot ceramic structure, an inner cold structure and a multilayer insulation between alternating fibrous and reflective layers. Blankets made of fibrous insulating felts quilted between layers of high temperature ceramic fabrics may serve as alternative to the multilayer stack.

Structurally integrated TPS, in turn, consist of a double wall structure with thermal insulation in between both walls. Outer and inner wall carry respective airframe loads, while the outer wall is operating at high temperatures and the inner wall is insulated.

Finally. CMCs are well known for space and high temperature use cases. Aeronautical CMC applications exist in engines or as brake disks, but high material and processing costs prevent a wider use in airframe structures.

All - partially contradicting - requirements need to be met at an optimized compromise between weight, cost, thermal and mechanical performance. This can be achieved by the combination of different oxide matrix constituents and different grades of high temperature resistant (glass) fibers. For instance, an oxide matrix composition may consist of Silica or Silica/Alumina mixtures as well as some additives. Matrix composition mixtures of Silica/Alumina may range from 100/0 to 20/80, preferably from 70/30 to 30/70. Amongst the different grades of high temperature resistant glass fibers, melt-spun Silica fibers with high (~95 %) but not too high (>97-98 %) Silica content are the preferred reinforcing material for CMC helicopter firewalls.

High temperature resistant glass fibers are characterized by high Silica content. This can be achieved by either producing the fibers from high Silica content raw materials, or by removing most of non-Silica constituents from the fibers after their manufacturing by a so-called leaching process.

Leached standard E-glass fibers are high temperature resistant and comparatively cheap, but of lower mechanical performance due to the leaching process, which is leading to defects in the fibers. Silica fibers drawn from (almost) pure Silica glass rods show high mechanical properties, but are expensive due to the complex manufacturing process.

Therefore, in order to achieve high temperature resistance and good mechanical performance at reasonable costs, it is advantageous to use fibers manufactured from raw materials with already high Silica content, which still can be produced by the standard and cost-efficient glass fiber melt spinning process. Mild leaching afterwards not to the highest Silica content, but acceptance of around 5 % of non-Silica constituents improves mechanical performance and leads to a favorable overall compromise as reinforcing fibers for helicopter CMC firewalls in terms thermal and mechanical properties as well as costs.

Illustrative examples of components with respective thermal protections are described in the documents US 9 868 545 B2, WO 2009/040864 A1, and US 2021/0053333 A1. However, these thermal protections are not readily applicable to lower firewalls in a rotary wing aircraft.

It is an object of the present invention to provide a new rotary wing aircraft with an aircraft engine that is mounted to an engine accommodating region provided with a firewall arrangement that comprises at least one lower firewall which separates the aircraft engine from an upper primary skin, wherein in case of an aircraft engine fire the different heat transfer mechanisms, i. e. convection, conduction, and radiation, between the aircraft engine fire, the at least one lower firewall and the upper primary skin are simultaneously and synergistically addressed and managed in an efficient way. This object is solved by a rotary wing aircraft having the features of claim 1.

More specifically, according to the present invention a rotary wing aircraft includes a fuselage that comprises an upper primary skin and forms an aircraft interior region, the upper primary skin comprising a polymeric composite, in particular a carbon fiber reinforced polymer, and separating the aircraft interior region from an aircraft upper deck arranged above the fuselage. The aircraft upper deck comprises an engine accommodating region with a firewall arrangement, the engine accommodating region accommodating at least one aircraft engine within the firewall arrangement such that the firewall arrangement defines a fire proof separation at least between the at least one aircraft engine and the aircraft interior region. The firewall arrangement comprises at least one lower firewall that is arranged between the at least one aircraft engine and the upper primary skin of the fuselage, the at least one lower firewall being spaced apart from the upper primary skin by a first predetermined separation distance and from the at least one aircraft engine by a second predetermined separation distance. The at least one lower firewall includes at least a lower firewall panel and a high emissivity panel covering layer that covers the lower firewall panel and comprises a high emissivity of at least 0.7. The high emissivity panel covering layer is facing the at least one aircraft engine.

In the rotary wing aircraft according to the present invention, the aircraft upper deck represents the structural platform of the engine accommodating region wherein the aircraft engine is arranged. The aircraft upper deck is located on the upper primary skin which is internally supported by a set of frames and beams comprising a predetermined number of longitudinal and transversal beams which are used to react vertical loads introduced by the aircraft engine(s). The upper primary skin is part of the primary load carrying structure of the rotary wing aircraft and preferably comprises a polymeric composite, in particular a CFRP.

More specifically, the engine accommodating region represents a volume which encloses the aircraft engine and which is preferably delimited by the firewall arrangement which may comprise a mid firewall, a front firewall, a rear firewall, the lower firewall, as well as a cowling. The lower firewall is installed above the upper primary skin and arranged distantly apart from the upper primary skin by the first predetermined separation distance, and it is preferably designed to protect the upper primary skin and the predetermined number of supporting beams, as well as the aircraft interior region from higher impacting temperatures at operational conditions, but more especially in an engine fire event. Furthermore, the lower firewall is spaced apart from the aircraft engine by a second predetermined separation distance.

Advantageously, the lower firewall is an only slightly loaded non-structural component which is optimized for functionality. Its main functionalities are fire proofness, drainage of the engine accommodating region and acting as thermal barrier to protect the load carrying structure, in particular the upper primary skin, in an engine fire event.

More particularly, the lower firewall is preferably a lightweight and thermally insulating component which provides for a comparatively high thermal protection efficiency and keeps the upper primary skin within service temperature limits or at least significantly below degradation temperature in case of an engine fire event. Therefore, the lower firewall according to the present invention is a comparatively thin-walled multilayer component, consisting of at least one substrate with a covering layer, e. g. surface coating, on one or both surfaces to control emissivity of the respective surface. A potentially hot side of the lower firewall, i. e. the side of the lower firewall that faces the aircraft engine, is preferably coated with a high emissivity coating to emit as much as possible thermal energy by radiation in the direction from where the heat, i. e. high thermal energy, is coming, i. e. towards the aircraft engine. In case of an engine fire event, an underlying heat source is typically a kerosene flame impinging the lower firewall. The backside of the lower firewall, i. e. the side of the lower firewall that faces the upper primary skin, is preferably coated with a low emissivity coating to radiate as less as possible thermal energy from the lower firewall towards adjacent structural, in particular CFRP parts, such as the upper primary skin.

Advantageously, the lower firewall itself, i. e. the at least one substrate, is a monolithic CMC component and exhibits low thermal conductivity. In fact, CMC material has a thermal conductivity which is e. g. around one order of magnitude less compared to the thermal conductivity of titanium and the comparatively low density of the CMC material of 1.8 g/cc, e. g. compared to 4.5 g/cc of titanium, allows a higher wall thickness of the monolithic CMC component compared to a respective titanium component at the same weight. This leads to a higher equilibrium temperature of the hot surface and, therefore, to more thermal energy radiated away from the high emissivity hot surface and, in consequence, less thermal energy available to heat the backside of the lower firewall. The combination of lower backside temperature and low emissivity surface coating synergistically reduces the lower firewall's radiation heating potential towards adjacent structures.

In order to improve the overall firewall arrangement further and to protect adjacent structures such as the upper primary skin even better from thermal radiation emitted by the backside of the lower firewall, the adjacent structure, i. e. the upper primary skin may also be equipped with a low emissivity coating. Low emissivity equals high reflectivity. This is particularly important for all structures without metallic surfaces. In particular black CFRP (black: high emissivity and, therefore, high thermal absorption) as well as painted (aluminum) parts are prone to being heated by thermal radiation.

At this point, it should be noted that it may also be beneficial to design the at least one substrate of the lower firewall itself as a multilayer structure. Examples are double-walled or sandwich configurations, which may contain another material with even higher thermal insulation capacity as inner layer between both skins. The surfaces of the hot and cold skins may be coated as described above for the monolithic variant.

Advantageously, the high emissivity coating on the surface part of the engine accommodating region may include further functions. It can act as protective coating against environmental, mechanical and chemical attack and in particular to seal the open surface porosity of the CMC substrate to prevent any fluids, media, etc. present in the engine accommodating region from entering the lower firewall. Furthermore, the surface coating may also provide additional thermal insulation by being intumescent. When heated above the intumescence activation temperature, the coating starts to expand (typically by a factor of ~10) in thickness direction and forms an insulating char layer on the hot side of the lower firewall.

According to one aspect of the present invention, the high emissivity panel covering layer may comprise at least one of black polytetrafluorethylene, black polyetheretherketone, black ceramic coating, or black paint, coating, or high-temperature resin with carbon particles.

Preferably, the at least one lower firewall further comprises a low emissivity panel covering layer that covers the lower firewall panel and comprises a low emissivity of maximally 0.4, wherein the low emissivity panel covering layer is facing the upper primary skin.

The low emissivity panel covering layer may comprise a thickness in a range from 100 nm to 50 µm.

Preferably, the low emissivity panel covering layer comprises a metallic coating, in particular aluminum, chromium, silver, or gold, or a combination of two or more metallic coatings.

Metallization of the low emissivity panel covering layer may result from application of physical vapor deposition.

According to one aspect of the present invention, the upper primary skin may comprise a low emissivity skin covering layer that covers the upper primary skin and comprises a low emissivity of maximally 0.4, wherein the low emissivity skin covering layer is facing the at least one lower firewall.

Preferably, the low emissivity skin covering layer comprises a metallic coating, in particular aluminum, chromium, silver, or gold.

Alternatively, or optionally, the low emissivity skin covering layer may comprise white paint.

Alternatively, or optionally, the low emissivity skin covering layer may comprise a metallic foil, film or tape, in particular a self-adhesive aluminum foil, film or tape.

Alternatively, or optionally, the low emissivity skin covering layer may comprise a paint, in particular a metallic paint, or resin with metallic particles.

Preferably, the lower firewall panel is a monolithic panel that comprises fiber-reinforced ceramics.

The lower firewall panel may comprise a thickness in a range from 1 mm to 6 mm.

According to one aspect of the present invention, the first predetermined separation distance amounts at least to 20 mm.

According to one aspect of the present invention, the at least one lower firewall is funnel-shaped and converges from an outer perimeter to at least one inner collecting point.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of a rotary wing aircraft with an engine accommodating region,
- Figure 2 shows a perspective view of the engine accommodating region of Figure 2 with a firewall arrangement,
- Figure 3 shows a perspective view of the engine accommodating region of Figure 2, with one engine removed and with a dismounted lower firewall of the firewall arrangement of Figure 2,
- Figure 4 shows a partially cut view of a section of the engine accommodating region of Figure 2 and Figure 3 with the lower firewall of Figure 3,
- Figure 5 shows a schematic view of a section of the engine accommodating region of Figure 4 for illustrating the effects of an engine fire,
- Figure 6 shows a schematic view of a section of the engine accommodating region of Figure 4 for illustrating besides others the function principle of the lower firewall of Figure 4 in case of an engine fire according to Figure 5, and
- Figure 7 shows a schematic view of a section of the engine accommodating region of Figure 4 with an upper primary skin according to a variant.

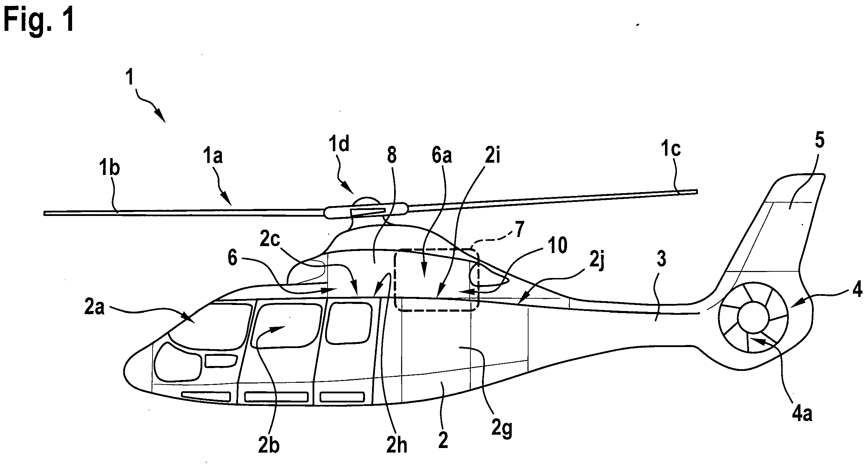

Figure 1 shows a rotary wing aircraft 1 that is exemplarily illustrated as a helicopter. Thus, for purposes of simplicity and clarity, the rotary wing aircraft 1 is hereinafter referred to as the "helicopter 1". The present invention is, however, not limited to helicopters and can likewise be applied to any other vehicle, in particular to vehicles wherein fireproof separations between adjacent compartments are required.

Preferably, the helicopter 1 comprises at least one multi-blade main rotor 1a for providing lift and forward or backward thrust during operation. The at least one multi-blade main rotor 1a preferentially comprises a plurality of rotor blades 1b, 1c that are mounted at an associated rotor head 1d to a rotor shaft, which rotates in operation of the helicopter 1 around an associated rotor axis.

Illustratively, the helicopter 1 comprises a fuselage 2 that forms an aircraft interior region 2a, 2b. The aircraft interior region 2a, 2b preferably accommodates at least a cockpit 2a and may further accommodate a cabin 2b for passengers and/or cargo. By way of example, a tail boom 3 is connected to the fuselage 2 of the helicopter 1.

The helicopter 1 illustratively further comprises at least one preferentially shrouded counter-torque device 4 configured to provide counter-torque during operation, i. e. to counter the torque created by rotation of the at least one multi-blade main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5.

According to one aspect, the fuselage 2 comprises an upper primary skin 2c that separates the aircraft interior region 2a, 2b from an aircraft upper deck 6 arranged above the fuselage 2. In other words, the upper primary skin 2c forms an upper end of the fuselage 2. The upper primary skin 2c comprises a polymeric composite, in particular a CFRP.

Illustratively, the upper primary skin 2c includes a front deck skin 2h, an engine deck skin 2i, and a rear deck skin 2j. The engine deck skin 2i is associated with an engine deck 6a that is part of the aircraft upper deck 6 and that illustratively forms an engine accommodating region 7 with a firewall arrangement 10. Preferably, the aircraft upper deck 6 and, more particularly, at least the engine deck 6a is covered by a cowling 8 that is mounted on top of the fuselage 2.

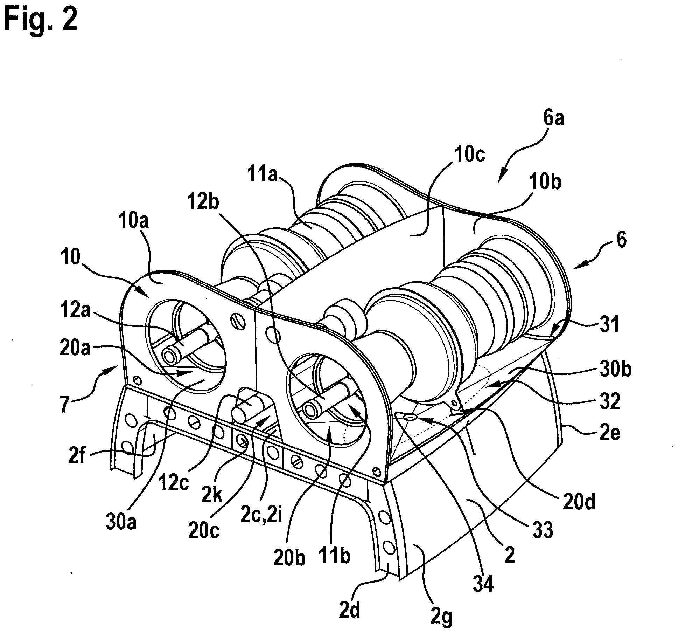

Preferably, the fuselage 2 includes side shells 2g (and 2f in Figure 2) which illustratively encase the aircraft interior region 2a, 2b and which are mounted to interconnected frames (2d, 2e in Figure 2) and longitudinal beams (2k in Figure 2) to form a primary structure of the helicopter 1 that is designed and adapted for global load carrying duties. Thus, the fuselage's upper primary skin 2c is also involved in these global load carrying duties and, consequently, contributes to global load carrying of the fuselage 2.

Figure 2 shows the engine deck 6a of Figure 1 which is part of the aircraft upper deck 6 of the helicopter 1 of Figure 1 and that forms the engine accommodating region 7 with the firewall arrangement 10. However, in contrast to Figure 2 the engine deck 6a is shown without the cowling 8 of Figure 1.

The engine deck 6a is arranged above the fuselage 2 of Figure 1, which includes by way of example the side shell 2g and a further side shell 2f. Both side shells 2f, 2g are at least mounted to first and second frames 2d, 2e of the fuselage 2, which are associated with the engine deck 6a and, therefore, also referred to as the "front frame 2d" and the "rear frame 2e", for simplicity and clarity. By way of example, the front and rear frames 2d, 2e delimit the engine deck 6a, i. e. the engine accommodating region 7, in the longitudinal direction of the helicopter 1 of Figure 1. Furthermore, the front frame 2d and the rear frame 2e are illustratively interconnected via one or more longitudinal beams 2k. The front frame 2d, the rear frame 2e, and the one or more longitudinal beams 2k carry together the engine deck skin 2i and, thus, at least a portion of the upper primary skin 2c of Figure 1.

The engine accommodating region 7 accommodates at least one aircraft engine within the firewall arrangement 10 such that the firewall arrangement 10 defines a fire proof separation at least between the at least one aircraft engine and the aircraft interior region (2a, 2b in Figure 1). More generally, the firewall arrangement 10 preferably defines a fire proof separation between the at least one aircraft engine and other adjacent aircraft regions. Such other adjacent aircraft regions include the aircraft interior region (2a, 2b in Figure 1), as well as e. g. an engine compartment(s) of a further aircraft engine(s), and forward and aft regions to the engine accommodating region 7, such as e. g. gearbox or exhaust accommodating regions.

Illustratively, the engine accommodating region 7 accommodates two aircraft engines 11a, 11b within the firewall arrangement 10. Each aircraft engine 11a, 11b is preferably arranged in an associated engine compartment 20a, 20b. By way of example, two adjacent engine compartments 20a, 20b are provided. Illustratively, each aircraft engine 11a, 11b is at least mounted to associated engine mounts 20d provided in the associated engine compartment 20a, 20b.

The two aircraft engines 11a, 11b may be embodied as air breathing propulsion gas turbines, which combust a fuel/air mix for power generation. Illustratively, each aircraft engine 11a, 11b has an associated drive shaft 12a, 12b, e. g. for driving an associated main gearbox of the helicopter 1 of Figure 1.

According to one aspect, the two aircraft engines 11a, 11b and, thus, the two adjacent engine compartments 20a, 20b are covered by the cowling 8 of Figure 1 and separated from each other by means of a mid firewall 10c of the firewall arrangement 10. The mid firewall 10c preferably forms a drive shaft channel 20c for a tail rotor drive shaft 12c.

The firewall arrangement 10 illustratively further includes at least a front firewall 10a and a rear firewall 10b. Preferably, each one of the front firewall 10a, the rear firewall 10b, and the mid firewall 10c comprises a fire proof material, including at least one of titanium, steel, ceramics, a polymeric composite, or a hybrid organic-inorganic composite. In one realization, at least one of the front firewall 10a, the rear firewall 10b, or the mid firewall 10c has a titanium skin with a minimum thickness of 0.4 mm, preferably with a thickness in a range from 0.6 mm to 0.8 mm.

Furthermore, the firewall arrangement 10 comprises at least one associated lower firewall. Illustratively, a lower firewall 30a, 30b is provided for each engine compartment 20a, 20b. In other words, the engine compartment 20a includes the lower firewall 30a, and the engine compartment 20b includes the lower firewall 30b. For simplicity and conciseness, only the lower firewall 30b is described hereinafter as a representative example of an inventive lower firewall. However, it should be noted that the lower firewall 30a is preferably embodied and mounted similarly, at least within predetermined manufacturing tolerances.

According to one aspect, the lower firewall 30b is arranged between the aircraft engine 11b and the engine deck skin 2i, i. e. the upper primary skin 2c of the fuselage 2. Illustratively, the lower firewall 30b is funnel-shaped and converges from an outer perimeter 31 to at least one inner collecting point 33. The outer perimeter 31 is preferably at least attached to the front firewall 10a and the rear firewall 10b and, preferentially, also to the mid firewall 10c. More specifically, the outer perimeter 31 is preferably removably attached to the front firewall 10a, the rear firewall 10b, and/or the mid firewall 10c. Accordingly, the funnel-shaped lower firewall 30b is uninvolved in the global load carrying of the fuselage 2.

The at least one inner collecting point 33 is illustratively arranged within a center portion 32 of the funnel-shaped lower firewall 30b. Preferably, the at least one inner collecting point 33 of the funnel-shaped lower firewall 30b comprises at least one drainage hole 34.

However, it should be noted that other embodiments of the funnel-shaped lower firewall 30b are likewise contemplated. For instance, the funnel-shaped lower firewall 30b may have two or more inner collecting points and, consequently, two or more associated funnel-shaped structures that are combined in the funnel-shaped lower firewall 30b.

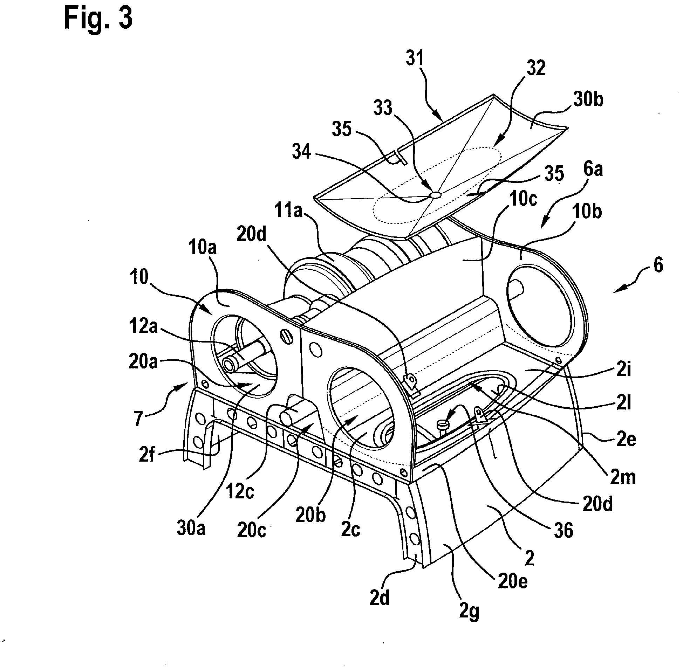

Figure 3 shows the engine deck 6a of Figure 2 with the engine deck skin 2i that is a part of the upper primary skin 2c. As described above, the engine deck 6a forms the engine accommodating region 7 with the firewall arrangement 10 above the fuselage 2. The firewall arrangement 10 accommodates the aircraft engine 11a in the engine compartment 20a. However, in contrast to Figure 2 the aircraft engine 11b is illustratively removed from the engine compartment 20b that includes the lower firewall 30b with the center portion 32 and the at least one drainage hole 34.

Preferably, the lower firewall 30b covers an entire footprint of the engine compartment 20b. Therefore, the lower firewall 30b may be connected at its outer perimeter 31 to the front firewall 10a, the rear firewall 10b, and the mid firewall 10c of the firewall arrangement 10. Furthermore, the lower firewall 30b may also be connected, preferentially attached, at its outer perimeter 31 to a lateral lower firewall mount 20e. This lateral lower firewall mount 20e may e. g. be integrated into the side shell 2g of Figure 2 of the fuselage 2.

By way of example, the lower firewall 30b comprises at least one and, illustratively, two receiving slots 35. These receiving slots 35 are adapted to receive the engine mounts 20d of Figure 2 such that the engine mounts 20d are accessible in the engine compartment 20b.

Illustratively, the engine mounts 20d are connected to the engine deck skin 2i, i. e. to the upper primary skin 2c. The engine deck skin 2i and, thus, the upper primary skin 2c preferably comprises a cut-out 2l with an inner perimeter 2m. A respective number of provided cut-outs may depend on a given number of drainage holes provided in the lower firewall 30b. By way of example, the dimensions of the cut-out 2l corresponds to the dimensions of the center portion 32 of the lower firewall 30b.

A drainage system 36 is illustratively arranged on a lower side of the engine deck skin 2i. The drainage system 36 is preferably connectable to the lower firewall's at least one drainage hole 34.

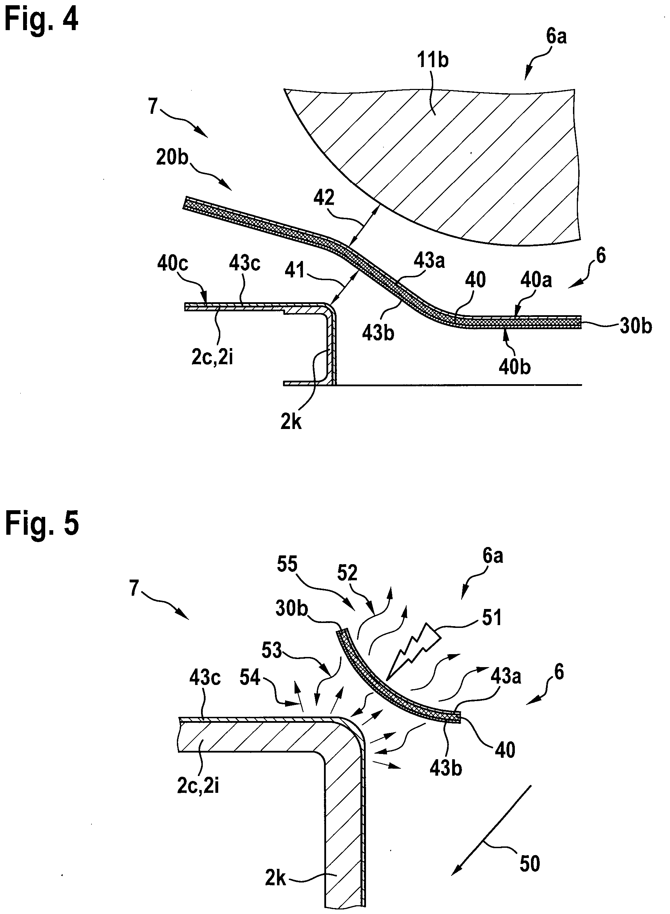

Figure 4 shows the engine deck 6a of Figure 2 and Figure 3 with the engine deck skin 2i that is a part of the upper primary skin 2c. As described above, the engine deck 6a forms the engine accommodating region 7 with the aircraft engine 11b accommodated in the engine compartment 20b. The engine deck skin 2i, i. e. the upper primary skin 2c, is illustratively supported by at least one of the longitudinal beams 2k of Figure 2. The aircraft engine 11b is separated from the engine deck skin 2i, i. e. the upper primary skin 2c, by means of the lower firewall 30b of the firewall arrangement 10 of Figure 2 and Figure 3.

More specifically, the lower firewall 30b is arranged between the aircraft engine 11b and the upper primary skin 2c and spaced apart from the upper primary skin 2c by a first predetermined separation distance 41 and from the aircraft engine 11b by a second predetermined separation distance 42. The lower firewall 30b may have an overall thickness in a range from 2 to 2.5 mm, or more. The first predetermined separation distance 41 preferably amounts at least to 20 mm, preferentially to at least 30 mm. The second predetermined separation distance 42 is preferably equal to, or greater than, the first predetermined separation distance 41.

According to the present invention, the lower firewall 30b includes at least a lower firewall panel 40 and a high emissivity panel covering layer 43a that covers the lower firewall panel 40 and comprises a high emissivity of at least 0.7. The lower firewall panel 40 as such comprises preferably a low thermal conductivity. The high emissivity panel covering layer 43a is facing the aircraft engine 11b and, thus, illustratively arranged on an upper panel surface 40a. The high emissivity panel covering layer 43a may be integrally formed with the lower firewall panel 40 in one piece.

Preferably, the lower firewall 30b further comprises a low emissivity panel covering layer 43b that covers the lower firewall panel 40 and comprises a low emissivity of maximally 0.4. The low emissivity panel covering layer 43b is illustratively facing the upper primary skin 2c and, thus, arranged on a lower panel surface 40b. The low emissivity panel covering layer 43b preferably comprises a thickness in a range from 100 nm to 50 µm. In particular, the low emissivity panel covering layer 43b may be integrally formed with the lower firewall panel 40 in one piece.

Likewise, the upper primary skin 2c may comprise a low emissivity skin covering layer 43c that covers the upper primary skin 2c and comprises a low emissivity of maximally 0.4. Illustratively, the low emissivity skin covering layer 43c is facing the lower firewall 30b and, thus, arranged on an upper surface 40c of the engine deck skin 2i, i. e. the upper primary skin 2c. The low emissivity skin covering layer 43c may be integrally formed with the upper primary skin 2c in one piece. Alternatively, the low emissivity skin covering layer 43c may be a separately formed layer bonded or mechanically fastened to the primary skin 2c.

Figure 5 shows the engine deck 6a of Figure 4 with the lower firewall 30b and the engine deck skin 2i that is a part of the upper primary skin 2c which comprises a polymeric composite, in particular a CFRP. The lower firewall 30b comprises the lower firewall panel 40 and is provided with the high emissivity panel covering layer 43a and the low emissivity panel covering layer 43b, and the upper primary skin 2c is provided with the low emissivity skin covering layer 43c. However, illustration of the aircraft engine 11b is omitted, for simplicity and clarity.

More specifically, Figure 5 illustrates an underlying working principle of the lower firewall 30b and the upper primary skin 2c in case of a fire, in particular in an engine fire event of the aircraft engine 11b of Figure 4, which leads to a significant thermal radiation 51. The thermal radiation 51 results in a heat transfer directed from the aircraft engine 11b of Figure 4 towards the upper primary skin 2c, as illustrated with an arrow 50.

At least a portion of the thermal radiation 51 is reflected on the high emissivity panel covering layer 43a back towards the aircraft engine 11b of Figure 4, as illustrated with arrows 52. Thus, a so-called "hot zone" 55 occurs between the aircraft engine 11b of Figure 4 and the lower firewall 30b, within which the engine fire of the aircraft engine 11b of Figure 4 must be contained.

Another portion of the thermal radiation 51 passes through the lower firewall panel 40 with the low thermal conductivity such that only a residual thermal radiation is emitted from the low emissivity panel covering layer 43b towards the upper primary skin 2c, as illustrated with arrows 53. The residual thermal radiation 53 is reflected on the low emissivity skin covering layer 43c of the upper primary skin 2c back towards the lower firewall 30b, as illustrated with arrows 54.

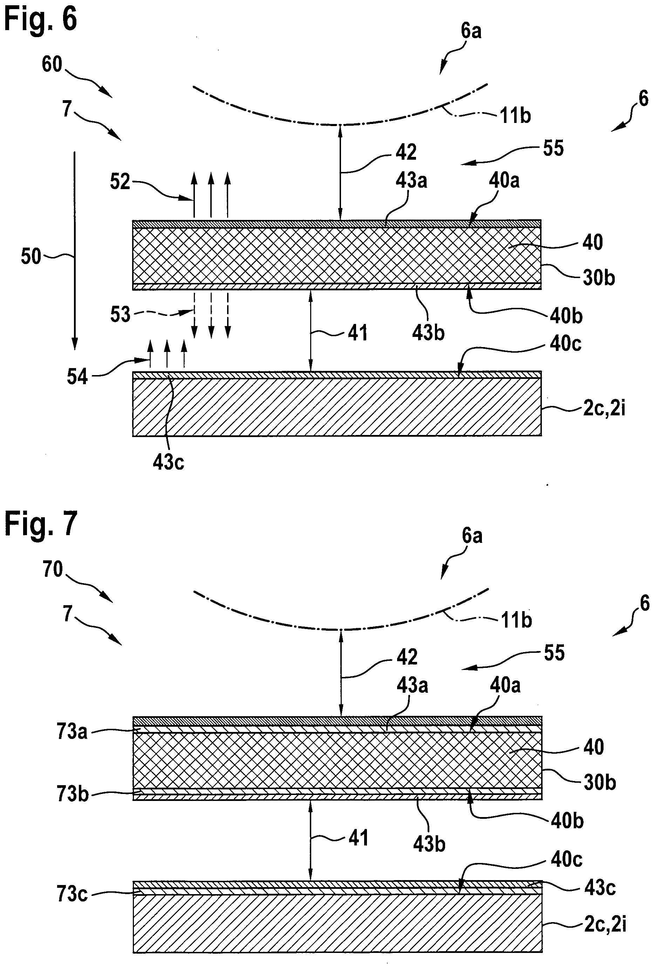

Figure 6 shows a functional diagram 60 of the engine deck 6a of Figure 4 and Figure 5 with the aircraft engine 11b, the lower firewall 30b, and the engine deck skin 2i that is a part of the upper primary skin 2c which comprises a polymeric composite, in particular a CFRP. According to Figure 4 and Figure 5, the lower firewall 30b comprises the lower firewall panel 40 and is provided with the high emissivity panel covering layer 43a and the low emissivity panel covering layer 43b, and the upper primary skin 2c is provided with the low emissivity skin covering layer 43c.

Preferably, the lower firewall panel 40 is a monolithic panel. Preferentially, the lower firewall panel 40 and, in particular, the monolithic panel comprises fiber-reinforced ceramics, i. e. is embodied using CMC material. The CMC material may mainly consist of alumina and silica with silica fibers as reinforcement. By way of example, the lower firewall panel 40 may comprise a thickness in a range from 1 mm to 6 mm.

Figure 6 also further illustrates in accordance with Figure 5 the heat transfer direction 50 from the hot zone 55 towards the upper primary skin 2c, together with the thermal radiation 52 from the high emissivity panel covering layer 43a of the lower firewall 30b back towards the aircraft engine 11b of Figure 4, the residual thermal radiation 53 from the low emissivity panel covering layer 43b of the lower firewall 30b towards the upper primary skin 2c, as well as the thermal radiation 54 from the low emissivity skin covering layer 43c of the upper primary skin 2c back towards the lower firewall 30b.

In order to provide the high emissivity panel covering layer 43a of the lower firewall 30b with a high emissivity of at least 0.7, the high emissivity panel covering layer 43a preferably comprises at least one of black polytetrafluorethylene, black polyetheretherketone, black ceramic coating, or black paint, coating, or high-temperature resin with carbon particles. Furthermore, in order to provide the low emissivity panel covering layer 43b of the lower firewall 30b with a low emissivity of maximally 0.4, the low emissivity panel covering layer 43b preferably comprises a metallic coating, in particular aluminum, chromium, silver, or gold, or a combination of two or more metallic coatings. In particular, metallization of the low emissivity panel covering layer 43b may result from application of physical vapor deposition. Moreover, in order to provide the low emissivity skin covering layer 43c of the upper primary skin 2c with a low emissivity of maximally 0.4, the low emissivity skin covering layer 43c may comprise a metallic coating, in particular aluminum, chromium, silver, or gold, e. g. with a coating thickness of approximately 1 µm. Alternatively, or optionally, the low emissivity skin covering layer 43c may comprise white paint. Alternatively, or optionally, the low emissivity skin covering layer 43c may comprise a metallic foil, film or tape, in particular a self-adhesive aluminum foil, film or tape. Alternatively, or optionally, the low emissivity skin covering layer 43c may comprise a paint, in particular a metallic paint, or resin with metallic particles.

Alternatively, the lower firewall 30b is a self-supporting cost- and weight-efficient multilayer/sandwich firewall structure which may be manufactured from CMC material and which is suitable to reduce the temperature emanating from an engine fire from 1100 °C down to service temperature of an upper primary skin which comprises a polymeric composite, in particular a CFRP, i. e. to approximately 135 °C.

Figure 7 shows a functional diagram 70 of the engine deck 6a of Figure 4 and Figure 5 with the aircraft engine 11b, the lower firewall 30b, and the engine deck skin 2i that is a part of the upper primary skin 2c which comprises a polymeric composite, in particular a CFRP. According to Figure 4 and Figure 5, the lower firewall 30b comprises the lower firewall panel 40 and is provided with the high emissivity panel covering layer 43a on the upper panel surface 40a and the low emissivity panel covering layer 43b on the lower panel surface 40b, and the upper primary skin 2c is provided with the low emissivity skin covering layer 43c on its upper surface 40c.

Illustratively, an intermediate layer 73a is interposed between the upper panel surface 40a and the high emissivity panel covering layer 43a of the lower firewall 30b. Similarly, an intermediate layer 73b may be interposed between the lower panel surface 40b and the low emissivity panel covering layer 43b of the lower firewall 30b. Likewise, an intermediate layer 73c may be interposed between the upper surface 40c and the low emissivity skin covering layer 43c of the upper primary skin 2c.

The intermediate layers 73a, 73b, 73b may be advantageous to provide for an improved adhesion between the respective surfaces 40a, 40b, 40c and the associated covering layers 43a, 43b, 43c.

It should be noted that modifications to the above described embodiments are within the common knowledge of the person skilled in the art and, thus, also considered as being part of the present invention. It should further be noted that the drawings are only intended for schematically representing embodiments of the present invention and not for showing detailed constructions thereof.

### Reference List

1 rotary wing aircraft
1a multi-blade main rotor
1b, 1c rotor blades
1d rotor head
2 fuselage
2a cockpit
2b cabin
2c upper primary skin of fuselage
2d front frame of engine deck
2e rear frame of engine deck
2f, 2g fuselage side shells
2h front deck skin
2i engine deck skin
2j rear deck skin
2k longitudinal beams
2l cut-out of upper primary skin
2m inner perimeter of cut-out
3 tail boom
4 counter-torque device
4a tail rotor
5 fin
6 aircraft upper deck
6a engine deck
7 engine accommodating region
8 cowling
10 firewall arrangement
10a front firewall
10b rear firewall
10c mid firewall
11a, 11b aircraft engines
12a, 12b aircraft engine drive shafts
12c tail rotor drive shaft
20a, 20b engine compartments
20c tail rotor drive shaft channel
20d engine mounts
20e lateral lower firewall mounts
30a, 30b lower firewalls
31 outer perimeter of lower firewall
32 center portion of lower firewall
33 inner collecting point of lower firewall
34 drainage hole
35 engine mounts receiving slots
36 drainage system
40 firewall panel
40a upper panel surface
40b lower panel surface
40c engine deck skin upper surface
41 separation distance between engine deck skin and lower firewall
42 separation distance between lower firewall and aircraft engine
43a upper panel surface covering layer
43b lower panel surface covering layer
43c engine deck skin upper surface covering layer
50 heat transfer direction
51 thermal radiation from engine fire
52 thermal radiation reflected from upper panel surface covering layer
53 residual thermal radiation emitted from lower panel surface covering layer
54 thermal radiation reflected from engine deck skin upper surface covering layer
55 hot zone
60, 70 functional diagrams
73a upper panel surface intermediate layer
73b lower panel surface intermediate layer
73c engine deck skin upper surface intermediate layer

## Claims

1. A rotary wing aircraft (1) with a fuselage (2) that comprises an upper primary skin (2c) and forms an aircraft interior region (2a, 2b), the upper primary skin (2c) comprising a polymeric composite, in particular a carbon fiber reinforced polymer, and separating the aircraft interior region (2a, 2b) from an aircraft upper deck (6) arranged above the fuselage (2); wherein the aircraft upper deck (6) comprises an engine accommodating region (7) with a firewall arrangement (10), the engine accommodating region (7) accommodating at least one aircraft engine (11b) within the firewall arrangement (10) such that the firewall arrangement (10) defines a fire proof separation at least between the at least one aircraft engine (11b) and the aircraft interior region (2a, 2b); wherein the firewall arrangement (10) comprises at least one lower firewall (30b) that is arranged between the at least one aircraft engine (11b) and the upper primary skin (2c) of the fuselage (2), the at least one lower firewall (30b) being spaced apart from the upper primary skin (2c) by a first predetermined separation distance (41) and from the at least one aircraft engine (11b) by a second predetermined separation distance (42); wherein the at least one lower firewall (30b) includes at least a lower firewall panel (40) and a high emissivity panel covering layer (43a) that covers the lower firewall panel (40) and comprises a high emissivity of at least 0.7; and wherein the high emissivity panel covering layer (43a) is facing the at least one aircraft engine (11b).

2. The rotary wing aircraft (1) of claim 2, wherein the high emissivity panel covering layer (43a) comprises at least one of black polytetrafluorethylene, black polyetheretherketone, black ceramic coating, or black paint, coating, or high-temperature resin with carbon particles.

3. The rotary wing aircraft (1) of claim 1 or 2, wherein the at least one lower firewall (30b) further comprises a low emissivity panel covering layer (43b) that covers the lower firewall panel (40) and comprises a low emissivity of maximally 0.4, and wherein the low emissivity panel covering layer (43b) is facing the upper primary skin (2c).

4. The rotary wing aircraft (1) of claim 3, wherein the low emissivity panel covering layer (43b) comprises a thickness in a range from 100 nm to 50 µm.

5. The rotary wing aircraft (1) of claim 3 or 4, wherein the low emissivity panel covering layer (43b) comprises a metallic coating, in particular aluminum, chromium, silver, or gold, or a combination of two or more metallic coatings.

6. The rotary wing aircraft (1) of claim 5, wherein metallization of the low emissivity panel covering layer (43b) results from application of physical vapor deposition.

7. The rotary wing aircraft (1) of any one of the preceding claims, wherein the upper primary skin (2c) comprises a low emissivity skin covering layer (43c) that covers the upper primary skin (2c) and comprises a low emissivity of maximally 0.4, and wherein the low emissivity skin covering layer (43c) is facing the at least one lower firewall (30b).

8. The rotary wing aircraft (1) of claim 7, wherein the low emissivity skin covering layer (43c) comprises a metallic coating, in particular aluminum, chromium, silver, or gold.

9. The rotary wing aircraft (1) of claim 7, wherein the low emissivity skin covering layer (43c) comprises white paint.

10. The rotary wing aircraft (1) of claim 7, wherein the low emissivity skin covering layer (43c) comprises a metallic foil, film or tape, in particular a self-adhesive aluminum foil, film or tape.

11. The rotary wing aircraft (1) of claim 7, wherein the low emissivity skin covering layer (43c) comprises a paint, in particular a metallic paint, or resin with metallic particles.

12. The rotary wing aircraft (1) of any one of the preceding claims, wherein the lower firewall panel (40) is a monolithic panel that comprises fiber-reinforced ceramics.

13. The rotary wing aircraft (1) of any one of the preceding claims, wherein the lower firewall panel (40) comprises a thickness in a range from 1 mm to 6 mm.

14. The rotary wing aircraft (1) of any one of the preceding claims, wherein the first predetermined separation distance (41) amounts at least to 20 mm.

15. The rotary wing aircraft (1) of any one of the preceding claims, wherein the at least one lower firewall (30b) is funnel-shaped and converges from an outer perimeter (31) to at least one inner collecting point (33).
